# EUROPEAN PATENT SPECIFICATION

(11) **EP 3 786 439 B1**
(45) Date of publication and mention of the grant of the patent: **11.05.2022**
(21) Application number: 19193705.1
(22) Date of filing: 27.08.2019
(51) Int. Cl.: F02M 55/02, B29C 64/00

(54) **FUEL RAIL ASSEMBLY FOR AN INTERNAL COMBUSTION ENGINE AND A METHOD OF PRODUCING A FUEL RAIL ASSEMBLY**
KRAFTSTOFFZULEITUNGSANORDNUNG FÜR EINE BRENNKRAFTMASCHINE UND VERFAHREN ZUR HERSTELLUNG EINER KRAFTSTOFFZULEITUNGSANORDNUNG
ENSEMBLE RAMPE D'ALIMENTATION POUR UN MOTEUR À COMBUSTION INTERNE ET PROCÉDÉ DE FABRICATION D'UN ENSEMBLE RAMPE D'ALIMENTATION

(43) Date of publication of application: 03.03.2021
(73) Proprietor: Vitesco Technologies GmbH, 93055 Regensburg (DE)
(72) Inventor: Serra, Giandomenico, 56010 Ghezzano - S.Giuliano Terme (PI) (IT); Puccini, Andrea, 56028 San Miniato (PI) (IT); Pasquali, Marco, 57128 Livorno (IT)
(74) Representative: Vitesco Technologies

(56) References cited:
- DE-A1-102016 108 508
- DE-A1-102017 205 691
- DE-U1-202014 104 466
- US-A1- 2018 230 954

## Description

The present disclosure relates to a fuel rail assembly for an internal combustion engine, particularly but not exclusively a multi cylinder gasoline direct injection engine.

A fuel rail assembly commonly comprises an elongate fuel rail having an interior volume forming a fuel reservoir, a plurality of fuel injector cups spaced along the fuel rail and formed integrally therewith and being in communication with the reservoir. Each injector cup is adapted to receive an inlet of an associated fuel injector for each cylinder of the internal combustion engine for which the fuel rail assembly is intended. The fuel rail may have an inlet into the interior volume at one end that is hydraulically connected to a source of high pressure fuel, typically a high-pressure pump, and a sensor port to which a sensor is secured to measure the fluid pressure in the fuel rail. The end of the fuel rail tubular body opposite the inlet is closed in a fluid tight manner by a plug.

In use, the fuel rail assembly is subjected to high hydraulic pressures and is also located in a harsh environment in the engine bay of a vehicle where the assembly is subjected to high temperatures and vibration generated by both the engine and also the general movement of the vehicle. As a result, the fuel rail assembly is constructed in a very robust manner which makes it very heavy and expensive to manufacture, particularly as the individual components are manufactured separately before being secured to the fuel rail, typically by a brazing technique. Document US 2018 230 954 A discloses a fuel rail assembly for an internal combustion engine.

The present disclosure seeks to provide an improved fuel rail assembly and to a method of manufacturing the fuel rail.

According to the present disclosure there is provided a fuel rail assembly for an internal combustion engine comprising an elongate fuel rail having an interior volume forming a fuel reservoir, a at least one fuel injector cup on the fuel rail and formed integrally therewith, each injector cup being adapted to receive an inlet of an associated fuel injector and providing a fuel path between the fuel reservoir and the inlet of the fuel injector. At least one component of the fuel rail assembly is formed integrally with the fuel rail and has a skeletal framework.

The fuel rail assembly includes a plurality of fuel injector cups that are spaced along the fuel rail. Each injector cup being associated with a cylinder of the internal combustion engine.

The skeletal framework provides a component with a reduced weight compared to the weight of that component having a solid form. A skeletal framework has an open, porous structure including one or more holes formed between one or more solid elements. The one or more solid elements form a frame or framework.

The component having a skeletal framework is a component that does not come into contact with fuel and, therefore, does not have to define a liquid-tight volume. Consequently, the component may have an open, skeletal framework construction. The component may be a bracket, for example.

Stress levels in the fuel rail and the individual components attached thereto vary within each component, but the material used in the component has to cope with the stress level in the most highly stressed part of the component. The result can be that a component has an excess amount of material at the lower stressed areas than is strictly required for the correct functioning of the component. This leads to higher cost and weight of the vehicle, which reduces performance and increases environmental pollution.

According to the invention, the component is provided with a skeletal framework which enables the overall amount of material and the weight of the component to be reduced. The construction of the skeletal framework enables the component to withstand the stresses to which it is subjected in use by appropriate design of the skeletal framework.

From a practical point of view, it is not technically easy to remove unwanted material by techniques such as machining, since it can result in complex machining operations and extra processes in the manufacturing stage which slows down production. It is therefore often not practical from a cost or production efficiency point of view to carry out such operations. According to the invention, the skeletal framework of the component and, in some embodiments, one or more further components of the fuel rail assembly or the entire fuel rail assembly are manufactured using additive manufacturing technology which allows such shapes and forms to be easily manufactured.

The component is a mounting bracket having a fixing part for receiving a fastening device for securing the assembly to an engine. The fixing part of the mounting bracket is joined to the fuel rail by a pair of connecting elements that together provide the skeletal framework, since the connecting elements are spaced apart from one another. In some embodiments, more than two connecting elements may be sued to provide the skeletal framework.

The component is a fixing bracket. Each injector cup has associated therewith a fixing bracket formed integrally with the fuel rail, the fixing bracket being adapted to secure the fuel rail to an engine. The fixing bracket comprises the skeletal framework.

In some embodiments, one or more portions of the fixing bracket may have a skeletal construction.

In some embodiments, each fixing bracket comprises a base part adapted to contact the engine in the installed condition, and a spaced reaction part integral with the fuel rail for receiving a fastening device by which the fuel rail assembly is secured to the engine. The base part and the reaction part are connected by a plurality of connecting elements forming the skeletal framework.

The fastening device may be a screw-type device and is adapted to pass through the base part when securing the fuel rail assembly to the engine.

In one embodiment, three of said connecting elements are spaced about the axis of the fastening device. The connecting elements are spaced about the peripheral rim of the base part and the reaction part.

In some embodiments, a number and/or a spacing and/or a cross-sectional area of each connecting element is selected so as to optimise the stress distribution through the connecting elements. The number and/or the spacing and/or the cross-sectional area of each connecting element may be selected in dependence of the loads and the direction of the loads imposed on the fixing bracket and the connecting elements in order to, in use, optimise the stress distribution through the connecting elements.

In some embodiments, the cross-sectional area of one or more of the connecting elements varies along its length. The shape of the cross-sectional area of one or more of the connecting elements may be variable along its length.

In some embodiments, each fixing bracket comprises a web connecting the fixing bracket to its associated injector cup and the web comprises a skeletal framework. In some embodiments, the web comprises at least two web elements that form the skeletal framework.

The web connection of each fixing bracket to its associated injector cup may be formed integrally by the skeletal framework, whereby the dimensions and profile of the framework is determined to optimise the stress distribution across the connection.

In some embodiments, the surface profile of the base part of the fixing bracket, the surface profile abutting the engine when installed thereon, is shaped to mate with the contacting surface on the engine.

The assembly may be formed of a metal or alloy or of a synthetic plastics material.

A fuel rail assembly according to any one of the embodiments of the present disclosure may be formed by an additive manufacturing technique.

Additive manufacturing techniques may be used to build up the fuel rail layer by layer. For example, the elongate body and the component with the skeletal framework may be built up layer by layer using 3D (Three-dimensional) printing or Powder Bed Fusion or Directed Energy Deposition. The fuel rail may be built up layer by layer by movement of the metal jet print head, laser or electron beam controlled according to a three dimensional model of the fuel rail.

The use of additive manufacturing allows the production of forms, in the present case skeletal forms, which are difficult or expensive to form using traditional technologies. Due to the greater freedom in the distribution of the material, the amount of material used to fabricate the fuel rail may be reduced. This can be used to reduce the weight of the fuel rail. Additionally, due to the greater freedom in the distribution of the material, a better stress distribution can be provided so that material can be omitted in regions that are not subject to higher stresses in use. Material can also be added, for example the thickness can be increased, in regions that are subjected to higher stresses in use.

In some embodiments, the skeletal framework of the component is built up layer by layer by 3D printing or Powder Bed Fusion or Directed Energy Deposition. The skeletal framework is built up layer by layer by movement of the metal jet print head, laser or electron beam controlled according to a three dimensional model of the component and of the skeletal framework.

In some embodiments, the fuel rail assembly including the elongate fuel rail, injector cup and the component or components having a skeletal framework is manufactured using additive technology as a single integral component.

A fuel rail assembly in accordance with the present disclosure will now be described by way of example with reference to the accompanying drawings in which:-
- Figure 1: shows a perspective view of a fuel rail assembly for a three cylinder engine,
- Figure 2: shows a side view of the fuel rail assembly of Figure 1 partly in section,
- Figure 3: shows a plan view of Figure 2 partly in section, and
- Figure 4: shows an end view of the fuel rail assembly from the inlet end.

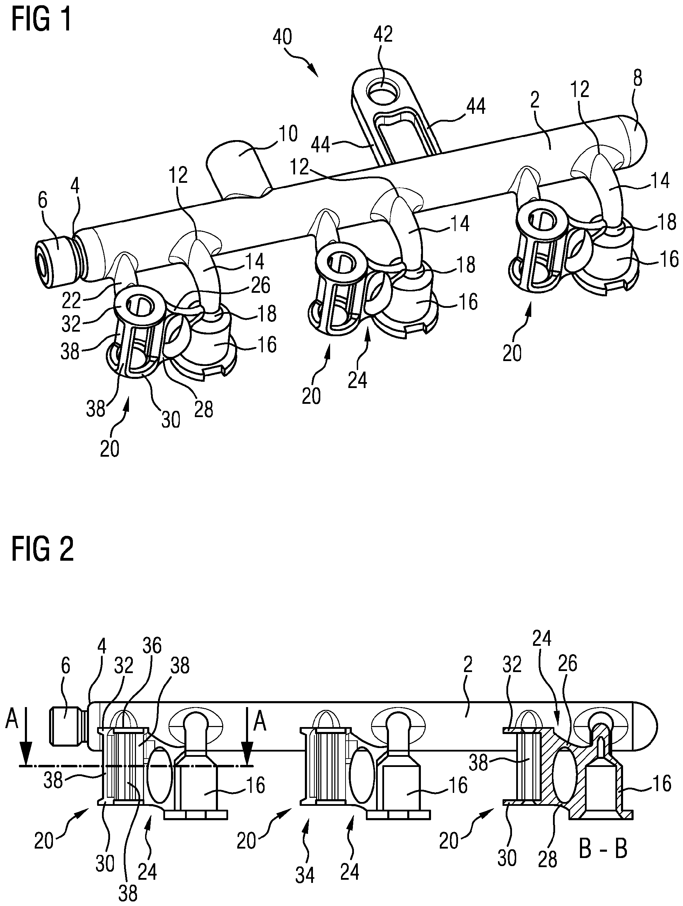

Referring now to Figure 1 there is shown a fuel rail assembly for a three cylinder gasoline direct injection internal combustion engine in which the components of the fuel rail assembly are formed of a one-piece construction by means of an additive manufacturing technique. Using this technique, it is possible to adjust the materials used for each part or part of a part for example by varying its cross-section and/or the shape of the cross-section.

The assembly comprises a fuel rail 2 comprising an elongate tube, which may be formed of stainless steel. At one end 4, the tube has an inlet port 6 adapted to be connected to a source of high pressure, typically a high-pressure pump (not shown) and at the other end the tube is closed by a plug 8 to form in the interior of the tube a volume providing a fuel reservoir. Intermediate the length of the tube there is a sensor port 10 to which a sensor (not shown) is connected so as to be in fluid communication with the fuel reservoir to monitor and measure the pressure in the reservoir.

Spaced along the length of the fuel rail 2 there are three outlet ports 12, one for each cylinder of the engine, each outlet port 12 having an outlet pipe 14 leading to an inlet port 18 of an associated injector cup 16. In an alternative embodiment, depending on the requirements of the particular installation, the injector cups are formed directly on the fuel rail 2 obviating the need for the outlet pipes. Each injector cup 16 is adapted to receive the inlet of a fuel injector (not shown) secured in the cylinder head of the associated engine so as to inject fuel directly into the combustion chamber of the associated cylinder (not shown).

A fixing bracket 20 is formed integrally with the fuel rail 2 by a web 22 and is connected to the injector cup 16 by a further web 24, shown in greater detail in Figure 2, particularly at the cross-section B-B. The web 24 has a skeletal construction. As can be seen in the cross-section B-B, the web 24 has an upper web element 26 and a lower web element 28 which are spaced apart from one another to provide the web 24 with a skeletal framework.

The cross-sectional area of the web elements 26, 28 varies along the length of the web 24 and the cross-sectional shape of the web elements 26, 28 may also vary, for example may be circular, square or nonuniform depending on the stresses to which the web 24 is subject during use. In this way, the design of the web elements 26, 28 can be shaped in dependence upon the loads imposed on the fixing bracket 20 and on the direction of the loads so that the stresses throughout the web elements 26 and 28 can be kept at predetermined optimum levels. In this way excess material in the web 24 is kept to a minimum with the consequent cost savings and lower weight of the product.

Referring now to Figure 1 and Figure 2 in particular, each fixing bracket 20 also has a base part 30 in the form of an annular ring adapted to abut the engine when the fuel rail is secured thereto. It is possible for the outer surface profile of the base part 30 to be shaped to be a mating fit with a surface of the engine to which it is to be secured. At its other end, each fixing bracket 20 has a reaction part 32 through which, in use, a screw-type fastening device 34 passes which also passes through the base part 30 to engage the engine. The head 36 of the fastening device 34 abuts the reaction part 32 to clamp the fixing bracket 20 securely to the engine.

The base part 30 and the reaction part 32 are joined by a skeletal framework in the form of three connecting elements 38. The three connection elements 38 are arranged at the peripheral rim of the base part 30 and the reaction part 32 and extend between the rings of the base part 30 and the reaction part 32 substantially parallel to the axis of the fixing bracket 20 and the axis of the fastening 34. The connection elements 38 are spaced apart from one another and bound open regions. Together the connecting elements 38 can be considered to form the frame of a cylinder.

As in the web elements 26 and 28, the cross-sectional area of each connecting element 38 may varied along the length of the connecting element and may also vary in cross-sectional shape, which may be circular, square or non-uniform depending on the loads imposed on the connecting elements 38 and the direction of the loads so that the stresses to which the connecting elements 38 are subject in use can be kept at predetermined optimum levels. The position and number of connecting elements 38 and the spacing between them, which may be described as the density of the connecting elements 38, may also be varied depending on the loads imposed on the connecting elements 38.

In some embodiments, such as that illustrated in the drawings, the web 22 between the fixing bracket 20 and the fuel rail 2 has a solid non-skeletal construction. In other non-illustrated embodiments, the web 22 may also have a skeletal construction. In some embodiments only one of the fixing bracket 20 and the web 24 exending between the fixing bracket 30 and the injector cup 16 has a skeletal framework.

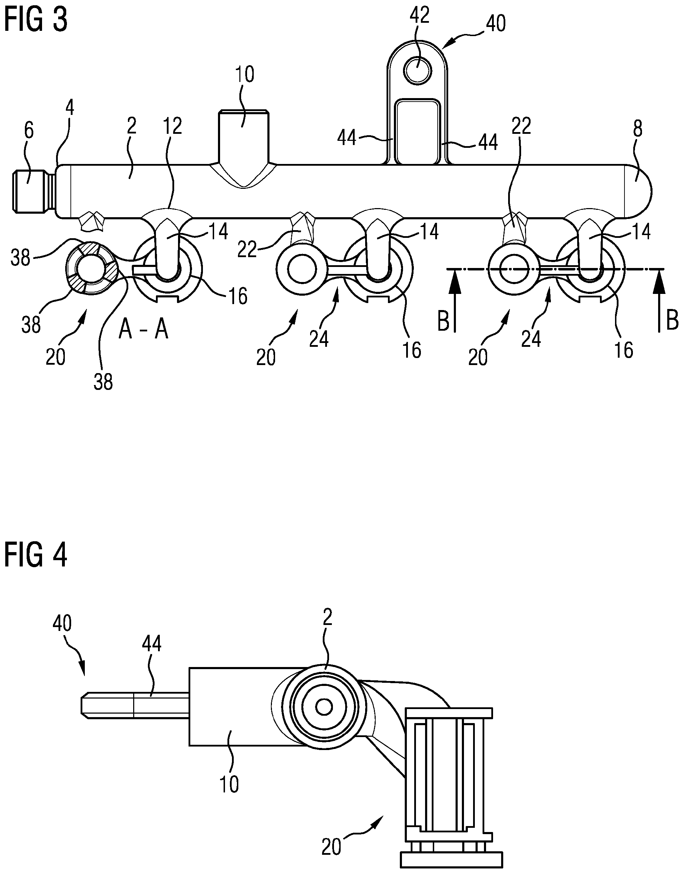

A skeletal framework may also be used for other components of the fuel rail assembly which are not required to come into contact with the fuel, for example other types of mountings or other types of bracket. Referring now to Figures 1, 3 and 4, a mounting 40 formed integrally with the fuel rail 2 is provided by which a fuel rail can be bolted to an engine at a fixing point 42. The fixing point 42 is secured to the fuel rail 2 by a pair of connecting elements 44 which provide a skeletal framework as described with reference to the web elements 26 and 28 and the connecting elements 38.

Whilst the illustrated fuel rail 2 includes three outlet ports 12 and is suitable for use with a three cylinder gasoline direct injection internal component engine, the skeletal framework may also be used in other types of fuel rail assemblies and with fuel rails with fewer or more than three outlet ports.

The fuel rail is designed with skeletal components in which the shape of the component is modified to remove material and decrease the weight of the component where it is overengineered without reducing the structural robustness of the components. The skeleton framework includes multiple thin connection elements which extend between two surfaces which are to be joined, for example between the fixing bracket 20 and the injector cup 16, or between the base part 30 and reaction part 32 of the fixing bracket 20 itself, or between the fixing point 42 of the mounting bracket 40 and the fuel rail 2.

### REFERENCE LIST

- 2: Fuel rail
- 4: Inlet end
- 6: Inlet port
- 8: Plug
- 10: Sensor port
- 12: Outlet port
- 14: Outlet pipe
- 16: Injector cup
- 18: Inlet port
- 20: Fixing bracket
- 22: Web
- 24: Further web
- 26: Upper web element
- 28: Lower web element
- 30: Base part
- 32: Reaction part
- 34: Fastening device
- 36: Head
- 38: Connecting element
- 40: Mounting bracket
- 42: Fixing part
- 44: Connecting element

## Claims

1. A fuel rail assembly for an internal combustion engine, the fuel rail assembly comprising an elongate fuel rail (2) having an interior volume forming a fuel reservoir and at least one fuel injector cup (16) on the fuel rail (2), each injector cup (16) being adapted to receive an inlet of an associated fuel injector and providing a fuel path between the fuel reservoir and the fuel inlet of the fuel injector, **characterised in that** at least one component (20, 40) of the fuel rail assembly is formed integrally with the fuel rail (2) and has a skeletal framework, wherein said component (40) comprises a mounting bracket having a fixing part (42) for receiving a fastening device for securing the assembly to an engine, the fixing part (42) being joined to the fuel rail (2) by a pair of connecting elements (44) providing the skeletal framework, wherein each injector cup (16) has associated therewith a fixing bracket (20) formed integrally with the fuel rail (2), the fixing bracket (20) being adapted to secure the fuel rail (2) to an engine and comprising the skeletal framework.

2. A fuel rail assembly according to claim 1, wherein each fixing bracket (20) comprises a base part (30) adapted to contact the engine in the installed condition, and a spaced reaction part (32) integral with the fuel rail (2) for receiving a fastening device (34) by which the fuel rail assembly is secured to the engine, wherein the base part (30) and the reaction part (32) are connected by a plurality of connecting elements (38) forming the skeletal framework.

3. A fuel rail assembly according to claim 2, wherein the fastening device (34) is a screw-type fastening device and is adapted to pass through the base part (30) when securing the fuel rail assembly to the engine.

4. A fuel rail assembly according to claim 2 or claim 3, wherein three of said connecting elements (38) are spaced about the peripheral rim of the base part (30) and the reaction part (32).

5. A fuel rail assembly according to any one of claims 2 to 4, wherein a number and/or a spacing and/or a cross-sectional area of each connecting element (38) is selected so as to optimise the stress distribution through the connecting elements (38).

6. A fuel rail assembly according to claim 5, wherein a cross-sectional area of one or more of the connecting elements (38) varies along its length.

7. A fuel rail assembly according to any one of claims 2 to 6, wherein the shape of the cross-sectional area of one or more of the connecting elements (38) is variable along its length.

8. A fuel rail assembly according to any one of claims 1 to 7, wherein each fixing bracket (20) comprises a web (24) connecting the fixing bracket (20) to its associated injector cup (16), wherein the web (24) comprises at least two web elements (26, 28) forming a skeletal framework.

9. A fuel rail assembly according to any one of claims 2 to 8, wherein the surface profile of the base part (30), which abuts the engine when installed thereon, is shaped to mate with the contacting surface on the engine.

10. A fuel rail assembly according to any one of the preceding claims, wherein the assembly is formed of a metal or alloy, or of a synthetic plastics material.

11. A method of manufacturing a fuel rail assembly according to any one of the preceding claims by the use of an additive manufacturing technology.

12. A method according to claim 11, wherein the skeletal framework of the component (20, 40) is built up layer by layer by 3D printing or Powder Bed Fusion or Directed Energy Deposition.

13. A method according to claim 11 or claim 12, wherein the skeletal framework is built up layer by layer by movement of the metal jet print head, laser or electron beam controlled according to a three dimensional model of the component (20, 40).

## Patentansprüche

1. Kraftstoffverteileranordnung für einen Verbrennungsmotor, wobei die Kraftstoffverteileranordnung einen länglichen Kraftstoffverteiler (2) mit einem Innenvolumen, das einen Kraftstoffbehälter ausbildet, und mindestens eine Kraftstoffeinspritzventilaufnahme (16) an dem Kraftstoffverteiler (2) umfasst, wobei jede Einspritzventilaufnahme (16) dazu ausgelegt ist, einen Einlass eines zugehörigen Kraftstoffeinspritzventils aufzunehmen und einen Kraftstoffpfad zwischen dem Kraftstoffbehälter und dem Kraftstoffeinlass des Kraftstoffeinspritzventils bereitzustellen, **dadurch gekennzeichnet, dass** mindestens eine Komponente (20, 40) der Kraftstoffverteileranordnung integral mit dem Kraftstoffverteiler (2) ausgebildet ist und eine skelettartige Rahmenstruktur aufweist, wobei die Komponente (40) eine Montagehalterung mit einem Fixierungsteil (42) zum Aufnehmen einer Befestigungsvorrichtung zum Sichern der Anordnung an einem Motor umfasst, wobei das Fixierungsteil (42) an den Kraftstoffverteiler (2) durch ein Paar von Verbindungselementen (44) gefügt ist, das die skelettartige Rahmenstruktur bereitstellt, wobei jede Einspritzventilaufnahme (16) eine dazu zugehörige Fixierungshalterung (20) aufweist, die integral mit dem Kraftstoffverteiler (2) ausgebildet ist, wobei die Fixierungshalterung (20) dazu ausgelegt ist, den Kraftstoffverteiler (2) an einem Motor zu sichern, und die skelettartige Rahmenstruktur umfasst.

2. Kraftstoffverteileranordnung nach Anspruch 1, wobei jede Fixierungshalterung (20) ein Basisteil (30), das dazu ausgelegt ist, im installierten Zustand mit dem Motor in Kontakt zu sein, und ein mit dem Kraftstoffverteiler (2) integrales, beabstandetes Reaktionsteil (32) zum Aufnehmen einer Befestigungsvorrichtung (34), durch welche die Kraftstoffverteileranordnung an dem Motor gesichert wird, umfasst, wobei das Basisteil (30) und das Reaktionsteil (32) durch eine Mehrzahl von Verbindungselementen (38) verbunden sind, welche die skelettartige Rahmenstruktur ausbilden.

3. Kraftstoffverteileranordnung nach Anspruch 2, wobei die Befestigungsvorrichtung (34) eine schraubenartige Befestigungsvorrichtung ist und dazu ausgelegt ist, durch das Basisteil (30) zu verlaufen, wenn sie die Kraftstoffverteileranordnung an dem Motor sichert.

4. Kraftstoffverteileranordnung nach Anspruch 2 oder Anspruch 3, wobei drei der Verbindungselemente (38) um den umlaufenden Rand des Basisteils (30) und des Reaktionsteils (32) beabstandet sind.

5. Kraftstoffverteileranordnung nach einem der Ansprüche 2 bis 4, wobei eine Anzahl und/oder eine Beabstandung und/oder eine Querschnittsfläche jedes Verbindungselements (38) derart ausgewählt ist, dass die Spannungsverteilung über die Verbindungselemente (38) optimiert wird.

6. Kraftstoffverteileranordnung nach Anspruch 5, wobei eine Querschnittsfläche eines oder mehrerer der Verbindungselemente (38) entlang ihrer Länge variiert.

7. Kraftstoffverteileranordnung nach einem der Ansprüche 2 bis 6, wobei die Form der Querschnittsfläche eines oder mehrerer der Verbindungselemente (38) entlang ihrer Länge variabel ist.

8. Kraftstoffverteileranordnung nach einem der Ansprüche 1 bis 7, wobei jede Fixierungshalterung (20) einen Steg (24) umfasst, welcher die Fixierungshalterung (20) mit ihrer zugehörigen Einspritzventilaufnahme (16) verbindet, wobei der Steg (24) mindestens zwei Stegelemente (26, 28) umfasst, die eine skelettartige Rahmenstruktur ausbilden.

9. Kraftstoffverteileranordnung nach einem der Ansprüche 2 bis 8, wobei das Oberflächenprofil des Basisteils (30), das an dem Motor anliegt, wenn es daran installiert ist, derart geformt ist, dass es mit der Kontaktfläche an dem Motor zusammenpasst.

10. Kraftstoffverteileranordnung nach einem der vorhergehenden Ansprüche, wobei die Anordnung aus einem Metall oder einer Legierung oder aus einem synthetischen Kunststoffmaterial ausgebildet ist.

11. Verfahren zum Fertigen einer Kraftstoffverteileranordnung nach einem der vorhergehenden Ansprüche unter Verwendung einer additiven Fertigungstechnologie.

12. Verfahren nach Anspruch 11, wobei die skelettartige Rahmenstruktur der Komponente (20, 40) Schicht für Schicht durch 3D-Druck oder Pulverbettschmelzen oder gerichtete Energieabscheidung aufgebaut wird.

13. Verfahren nach Anspruch 11 oder Anspruch 12, wobei die skelettartige Rahmenstruktur Schicht für Schicht durch eine Bewegung des Metallstrahldruckkopfs, Lasers oder Elektronenstrahls aufgebaut wird, der gemäß einem dreidimensionalen Modell der Komponente (20, 40) gesteuert wird.

## Revendications

1. Ensemble à rampe de carburant pour un moteur à combustion interne, l'ensemble à rampe de carburant comprenant une rampe de carburant allongée (2) ayant un volume intérieur formant un réservoir de carburant et au moins un manchon d'injecteur de carburant (16) sur la rampe de carburant (2), chaque manchon d'injecteur (16) étant adapté pour recevoir une entrée d'un injecteur de carburant associé et fournir un trajet de carburant entre le réservoir de carburant et l'entrée de carburant de l'injecteur de carburant, **caractérisé en ce qu'**au moins un composant (20, 40) de l'ensemble à rampe de carburant est formé de façon monobloc avec la rampe de carburant (2) et a une ossature squelette, dans lequel ledit composant (40) comprend un support de montage ayant une partie de fixation (42) pour recevoir un dispositif d'ancrage pour attacher l'ensemble à un moteur, la partie de fixation (42) étant jointe à la rampe de carburant (2) par une paire d'éléments de raccordement (44) fournissant l'ossature squelette, dans lequel chaque manchon d'injecteur (16) a, associé à celui-ci, un support de fixation (20) formé de façon monobloc avec la rampe de carburant (2), le support de fixation (20) étant adapté pour attacher la rampe de carburant (2) à un moteur et comprenant l'ossature squelette.

2. Ensemble à rampe de carburant selon la revendication 1, dans lequel chaque support de fixation (20) comprend une partie de base (30) adaptée pour entrer en contact avec le moteur dans la condition installée, et une partie de réaction espacée (32) monobloc avec la rampe de carburant (2) pour recevoir un dispositif d'ancrage (34) par lequel l'ensemble à rampe de carburant est attaché au moteur, dans lequel la partie de base (30) et la partie de réaction (32) sont raccordées par une pluralité d'éléments de raccordement (38) formant l'ossature squelette.

3. Ensemble à rampe de carburant selon la revendication 2, dans lequel le dispositif d'ancrage (34) est un dispositif d'ancrage de type vis et est adapté pour passer à travers la partie de base (30) lors de l'attache de l'ensemble à rampe de carburant au moteur.

4. Ensemble à rampe de carburant selon la revendication 2 ou la revendication 3, dans lequel trois desdits éléments de raccordement (38) sont espacées autour du pourtour périphérique de la partie de base (30) et de la partie de réaction (32).

5. Ensemble à rampe de carburant selon l'une quelconque des revendications 2 à 4, dans lequel un nombre et/ou un espacement et/ou une superficie de section transversale de chaque élément de raccordement (38) est sélectionné afin d'optimiser la distribution de tension à travers les éléments de raccordement (38).

6. Ensemble à rampe de carburant selon la revendication 5, dans lequel une superficie de section transversale d'un ou de plusieurs des éléments de raccordement (38) varie le long de sa longueur.

7. Ensemble à rampe de carburant selon l'une quelconque des revendications 2 à 6, dans lequel la forme de la superficie de section transversale d'un ou de plusieurs des éléments de raccordement (38) est variable le long de sa longueur.

8. Ensemble à rampe de carburant selon l'une quelconque des revendications 1 à 7, dans lequel chaque support de fixation (20) comprend une âme (24) raccordant le support de fixation (20) à son manchon d'injecteur associé (16), dans lequel l'âme (24) comprend au moins deux éléments d'âme (26, 28) formant une ossature squelette.

9. Ensemble à rampe de carburant selon l'une quelconque des revendications 2 à 8, dans lequel le profil de surface de la partie de base (30), qui est contigu au moteur lorsqu'elle est installée sur celui-ci, est formé pour s'accoupler à la surface de contact sur le moteur.

10. Ensemble à rampe de carburant selon l'une quelconque des revendications précédentes, dans lequel l'ensemble est formé d'un métal ou d'alliage, ou d'un matériau plastique synthétique.

11. Procédé de fabrication d'un ensemble à rampe de carburant selon l'une quelconque des revendications précédentes en utilisant une technologie de fabrication additive.

12. Procédé selon la revendication 11, dans lequel l'ossature squelette du composant (20, 40) est construite couche par couche par impression 3D ou fusion sur lit de poudre ou dépôt sous énergie dirigée.

13. Procédé selon la revendication 11 ou la revendication 12, dans lequel l'ossature squelette est construite couche par couche par mouvement de la tête d'impression à jet de métal, faisceau laser ou électronique commandé selon un modèle tridimensionnel du composant (20, 40).
